Europäisches Patentamt

European Patent Office

Office européen des brevets

(11) Veröffentlichungsnummer : **0 118 012**
**B1**

(12) # EUROPÄISCHE PATENTSCHRIFT

(45) Veröffentlichungstag der Patentschrift :
15.04.87

(21) Anmeldenummer : 84100904.6

(22) Anmeldetag : 28.01.84

(51) Int. Cl.⁴ : **B 25 J 17/02,** H 02 K   7/116

(54) Elektromotorisch getriebenes Robotergelenk.

(30) Priorität : 03.02.83 DE 3303555

(43) Veröffentlichungstag der Anmeldung :
12.09.84 Patentblatt 84/37

(45) Bekanntmachung des Hinweises auf die Patenterteilung : 15.04.87 Patentblatt 87/16

(84) Benannte Vertragsstaaten :
CH DE FR GB IT LI

(56) Entgegenhaltungen :
DE-A- 2 228 598
DE-A- 2 754 609
DE-A- 3 105 679
FR-A- 2 101 097
GB-A- 1 076 854
US-A- 2 450 290
US-A- 3 178 963

(73) Patentinhaber : Müller, Arnold
Klosterstrasse 48
D-7312 Kirchheim/Teck (DE)

(72) Erfinder : Wurst, Karl-Heinz, Dipl.-Ing.
Nelkenstrasse 1
D-7015 Korntal-Münchingen (DE)
Erfinder : Vogt, Günther, Dipl.-Ing.
Danziger Strasse 9
D-7257 Ditzingen 1 (DE)

(74) Vertreter : Patentanwälte Dipl.-Ing. Volkhard Kratzsch
Dipl.-Ing. Klaus Schulz
Mülbergerstrasse 65
D-7300 Esslingen (DE)

Jouve, 18, rue St-Denis, 75001 Paris, France

**Beschreibung**

Die Erfindung betrifft eine Vorrichtung zur Erzeugung von Schwenkbewegungen gemäß dem Oberbegriff des Patentanspruchs 1.

Eine bekannte Vorrichtung dieser Art (DE-A-22 28 598) ist konstruktiv nicht durchgebildet. Sie enthält einen elektrischen Scheibenläufermotor mit dem Scheibenläufer axial benachbartem Permanentmagneten und ferner ein konstruktiv nicht weiter ausgeführtes Untersetzungsgetriebe, wobei diese Elemente in einer kapselartigen Aufnahme der einen Gelenkhälfte eines solchen, aus zwei gelenkig verbundenen Teilen bestehenden Manipulators untergebracht sind. Diese Gelenkhälfte hat etwa Trommelform mit auf beiden Axialseiten angeordneten Axialwänden, wobei die andere Gelenkhälfte aus einer diese Trommel auf der ganzen Axiallänge durchsetzenden Hohlwelle besteht, durch die zugleich elektrische Versorgungs- und Steuerleitungen hindurchgeführt sind. Das vom Scheibenläufer angetriebene Untersetzungsgetriebe bildet einen außerordentlich grossen, sich axial an den Scheibenläufer anschließenden Block mit sehr grossen Abmessungen sowohl in Axialrichtung als auch in Radialrichtung. Das Untersetzungsgetriebe benötigt hier ein Vielfaches des Platzbedarfes, den der Elektromotor hat. Auf diese Weise baut die Vorrichtung sehr breit. Man muß aufpassen und konstruktiv Vorsorge treffen, daß der an die eine Gelenkhälfte anschliessende Arm nicht an demjenigen streift, an dem die andere Gelenkhälfte sitzt. Außerdem ergeben sind hierbei relativ grosse Massen, so daß bei der Ausbildung des Motors als Elektromotor die Anfahrströme hoch sind. Ausserdem bringen die Massen Verzögerungen mit sich und führen zu Schwinungen. Deswegen muß man die über Gelenkhälften schwenkbeweglich gekoppelten Arme sehr steif ausbilden, was zu erhöhten Massen führt. Dies alles gilt sowohl bei Knickachsen als auch bei Handachsen. Bei Knickachsen wird der Winkel wie bei einem Ellenbogen verändert während bei Handachsen der Winkel wie bei einer Längsdrehung um ein Handgelenk verändert wird. Da Vorrichtungen bekannter Art ausladend bauen, kann man sie schlecht schützen, z. B. durch einen Faltenbalg. Man kann nur unter hohem Aufwand explosionsgeschützte Antriebe realisieren. Die Leistungsdichte bekannter Vorrichtungen ist niedrig oder, anders formuliert, der Platzbedarf ist hoch. Ausserdem ergeben sich Lagerprobleme und erheblicher Aufwand für die Lagerung. Dennoch ist ein grösseres Spiel nicht zu vermeiden.

Andere bekannte Vorrichtungen dieser Art bauen sehr breit. Hierbei sitzt außen am Gelenk das Getriebe und noch weiter außen der Antriebsmotor. Wenn eine solche Vorrichtung symmetrisch sein soll, dann hat diese links und rechts vom Gelenk zunächst je ein Getriebe und zusätzlich neben dem Getriebe jeweils noch einen zugeordneten Motor. Der Aufwand ist sehr groß, da zwei Antriebsmotoren und zwei Getriebe nötig sind. Ferner führt dies zu hohen Gewichten und Massen. Diese Nachteile wurden aber bisher bei hier in Rede stehenden Vorrichtungen in Kauf genommen, weil man nur auf diese Weise auch sehr hohe Schwenkmomente erzeugen konnte.

Der Erfindung liegt die Aufgabe zugrunde, eine Vorrichtung der im Oberbegriff des Anspruchs 1 genannten Art zu schaffen, die eine hohe Leistungsdichte bei geringem Platzbedarf hat und prinzipiell sowohl bei Knickachsen als auch Handachsen verwendet werden kann. Dabei sollen ein sehr massearmer Aufbau und auch eine weitgehend spielfreie, zumindest aber sehr spielarme Anordnung möglich sein. Ferner soll die Vorrichtung einen möglichst geringen Aufwand erfordern, nur aus wenig Teilen bestehen und dennoch hinsichtlich der Untersetzungsgetriebevorrichtung eine hohe Untersetzung möglich machen, ferner kleine Radialabmessungen und/oder Axialabmessungen haben und trotz gedrängter Bauweise sehr hohe Schwenkmomente ermöglichen.

Die Aufgabe ist bei einer Vorrichtung der im Oberbegriff des Anspruchs 1 genannten Art gemäß der Erfindung durch die Merkmale im Kennzeichnungsteil des Anspruchs 1 gelöst.

Die erfindungsgemäße Ausgestaltung führt zu einem symmetrischen Antrieb, der sehr platzsparend ist und durch die Symmetrieeigenschaft optimal dimensioniert werden kann. Die Vorrichtung benötigt nur wenig Einzelteile und macht dennoch eine große Untersetzung möglich, wobei ferner alle Voraussetzungen dafür geschaffen sind, in Axialrichtung und/oder in Radialrichtung sehr klein und platzsparend zu bauen. Trotz gedrängter Bauweise sind extrem große Schwenkmomente erzeugbar. Außerdem ist eine einfache Montage und eine betriebssichere Funktion gewährleistet. Die hohe Untersetzung bei raumsparender Bauweise ist gepaart mit günstiger Einleitung und Ausleitung von Kräften. Eventuelle Unsymmetrien zwischen beiden Umlaufgetrieben und diese antreibendem Motor dazwischen werden vom Getriebe und/oder der Welle oder geeigneten sonstigen Mitteln aufgenommen. Mithin ist eine in hohem Maße spielarme und sehr genau arbeitende Vorrichtung erreicht. Die symmetrische Anordnung vermeidet Gelenktordierungen und verhindert daher Schwingungen in Richtung der Gelenkachse. Ein etwaiges Spiel läßt sich im übrigen mittels der Kodescheibe und des Meßwertaufnehmers ohne weiteres kompensieren, so daß selbst ein nicht so steifes Gelenk so weit belastet und ausgefahren werden kann, daß evtl. durch nicht so hohe Steifigkeiten auftretende Verbiegungen gleichwohl kompensiert werden. Die hierfür eingesetzte Meßvorrichtung ist einfach, billig und platzsparend.

Weitere vorteilhafte Maßnahmen ergeben sich aus Anspruch 2. Hierdurch vermeidet man voluminöse, massebehaftete Zuleitungen für einen an sich ebenfalls möglichen Hydraulikmotor. Ferner vermeidet man bei den insbesondere genannten Elektromotoren Zuleitung von Energie zum Rotor, was zur Funkenbildung führen würde und den Explosionsschutz erschweren würde, der z. B. bei Lackieranlagen wichtig ist. Der Elektromotor kann in dieser Form dann gemäß der Speisefrequenz gesteuert oder geregelt werden, was bei vielen Anwendungsfällen von Vorteil ist. Auch die Ausbildung als Käfigläufer-Asynchronmotor vermeidet eine Funkenbildung.

Durch die Merkmale im Anspruch 3 erreicht man bei nur wenig Einzelteilen eine große Untersetzung und dies bei sehr kompakter Bauweise mit sehr kleinem Platzbedarf.

Durch die Merkmale in den Ansprüchen 4 bis 8 werden folgende Vorteile erreicht. Zum einen benötigt man wenig Teile und erhält eine hohe Untersetzung, bei sehr schmaler Bauweise und trotz Verschachtelung sehr einfacher Montage. Zum anderen ergibt sich vor allem auch durch die Ausbildung des Hohlrades nach Anspruch 8 eine steife Ausführung, die hohe Kräfte aufnehmen kann.

Weitere vorteilhafte Ausgestaltungen enthalten die Ansprüche 9 bis 11, wodurch sich auch Unsymmetrien, die durch Schrägverzahnung oder nachgiebige Torsionswelle zwischen beiden Umlaufgetrieben aufgenommen werden, schnell und mit hoher Dynamik ausgleichen lassen. Auf diese Weise kann der in der symmetrischen Anordnung beidseitiger Umlaufgetriebe liegende Vorteil voll genutzt werden.

Eine weitere vorteilhafte Ausgestaltung ergibt sich aus Anspruch 12. Optische Meßwertaufnehmer haben den Vorteil hoher Auflösung. Magnetische Meßwertaufnehmer haben den Vorteil wesentlich größerer Unempfindlichkeit verglichen mit optischen Systemen.

Weitere vorteilhafte Maßnahmen ergeben sich aus den Ansprüchen 13 bis 15. Auf diese Weise wird mit einfachen Mitteln durch die symmetrische Anordnung die Belastung gleichmäßig auf beide Gelenkhälften verteilt. Es versteht sich, daß das nachgiebige Verhalten als Torsionswelle durch entsprechende Auslegung nach Festigkeitsgesichtspunkten oder z. B. als Gestaltung als Hohlwelle od. dgl. problemlos erreichbar ist.

Eine weitere vorteilhafte Ausbildung eines Planetengetriebes ergibt sich aus Anspruch 16 mit den vorteilhaften Weiterbildungen in den Ansprüchen 17 bis 19. Ein solches Planetengetriebe baut axial extrem klein und ermöglicht gleichwohl hohe Untersetzungen. Vorteilhaft ist ferner, daß die Anzahl der Lagerstellen hierdurch noch weiter reduziert werden kann. Als Planetenrad, das beiden Hohlrädern zugeordnet ist, kann ein einziges, axial durchgehendes Planetenrad zum Einsatz kommen, wenn beide Hohlräder gleiche Durchmesser haben, jedoch Zähnezahlunterschiede, z. B. von 1, besitzen. Statt dessen ist auch die Ausbildung gemäß Anspruch 19 vorteilhaft.

Weitere Einzelheiten und Vorteile ergeben sich aus der nachfolgenden Beschreibung.

Die Erfindung ist nachfolgend anhand von in den Zeichnungen gezeigten Ausführungsbeispielen näher erläutert. Es zeigen :

Figur 1 eine schematische, teilweise geschnittene Seitenansicht einer Vorrichtung in der Ausbildung als Knickachse, gemäß einem ersten Ausführungsbeispiel.

Figur 2 ein schematisches Blockschaltbild,

Figur 3 einen schematischen Schnitt, etwa entsprechend Fig. 1, der linken Seite einer Vorrichtung gemäß einem zweiten Ausführungsbeispiel.

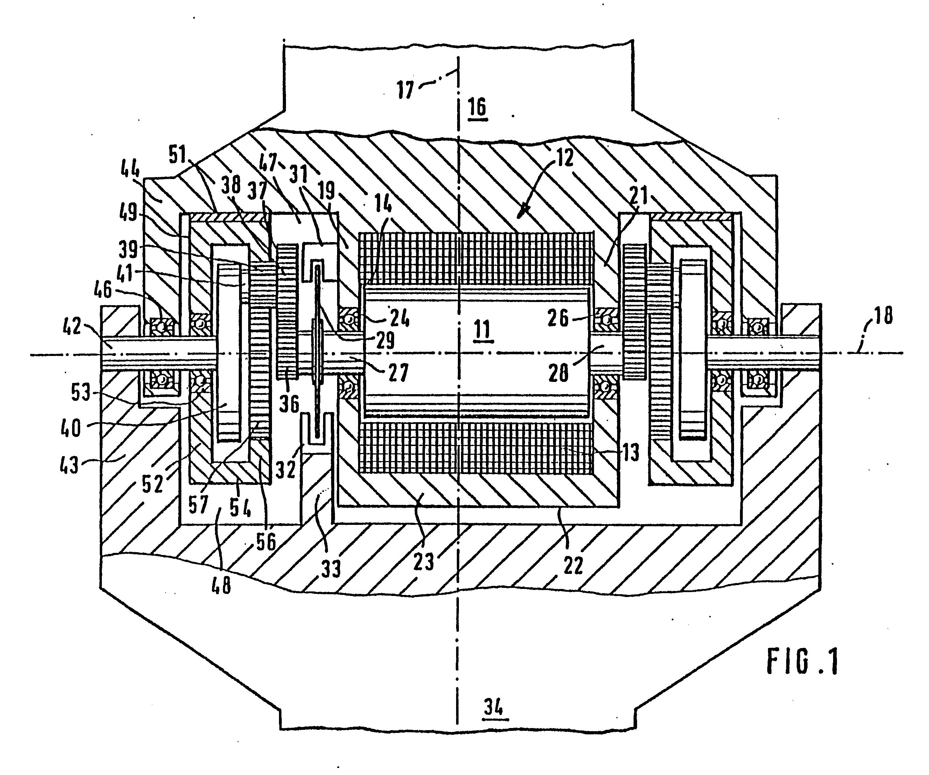

Fig. 1 zeigt einen Rotor 11 eines Elektromotors 12, der einen Stator 13 aufweist. Der Elektromotor 12 befindet sich in einer kreiszylindrischen Ausnehmung 14 einer ersten Gelenkhälfte 16. Die Ausnehmung 14 ist symmetrisch zur Halbebene 17, die senkrecht zur Zeichenebene von Fig. 1 steht. In dieser Halbebene 17 soll die Vorrichtung arbeiten. Der Rotor 11, der Stator 13 und die Ausnehmung 14 liegen koaxial zu einer geometrischen Querachse 18. Die Ausnehmung 14 hat Seitenwände 19, 21. Diese sind in einer Ebene senkrecht zur Zeichenebene von Fig. 1 und die geometrische Querachse 18 durchdringend geteilt, so daß ein Gehäusedeckel entsteht, der von unten gegen die obere Hälfte der Seitenwände 19, 21 geschraubt werden kann. Dieser Deckel 22 geht mit seiner halbzylindrischen Querwand 23 in die geteilten Seitenwände 19, 21 über.

Die Seitenwände 19, 21 haben koaxial zur geometrischen Querachse 18 Lager 24, 26, welche die linke Welle 27 und die rechte Welle 28 des Rotors 11 lagern. Der Stator 13 ist fest mit der ersten Gelenkhälfte 16 verbunden. Außerhalb, links von der Seitenwand 19, ist eine Kodescheibe oder Strichscheibe 29 zur Wegemaßverkörperung drehfest auf der Welle 27 befestigt. Mit der Seitenwand 19, d. h. starr mit der ersten Gelenkhälfte 16, ist ein erster Meßwertaufnehmer in Form eines optischen oder magnetischen Abtastkopfes 31 starr befestigt, der die Kodierung der Strichscheibe 29 lesen kann. Ein zweiter entsprechender Abtastkopf 32, der ebenfalls der Strichscheibe 29 zugeordnet ist, ist starr mit einem Vorsprung 33 einer zweiten Gelenkhälfte 34 verbunden. Die Lage des ersten Abtastkopfes 31 stellt also die Lage der ersten Gelenkhälfte 16 dar. Dieser Abtastkopf dient zusammen mit der Strichscheibe 29 zur Rotorpositionswinkelmessung. Die Lage des zweiten Abtastkopfes 32 stellt die Lage der zweiten Gelenkhälfte 34 dar. Der zweite Abtastkopf 32 dient zusammen mit der Strichscheibe 29 und dem ersten Abtastkopf 31 zur direkten Gelenkwinkelstellungsmessung.

Links trägt die Welle 27 ein zentrales Zahnrad 36. Dieses Zahnrad 36 kämmt mit einem Planetenrad 37, das einstückig aus einem größeren Planetenteilrad 38 und einem kleineren Planetenteilrad 39 besteht. Mit einer Welle 41 ist das Planetenrad 37 drehbar an einer zur geometrischen Querachse 18 koaxialen Scheibe 40 gelagert, die den sogenannten Planetenträger oder Steg bildet und die einen nach links gehenden koaxialen Zapfen 42 aufweist, der drehfest mit einer linken Außenwange 43 der zweiten Gelenkhälfte 34 verbunden ist.

Die linke Außenwange 44 der ersten Gelenkhälfte 16 liegt näher an der Halbebene 17. Im nach unten weisenden Endbereich ist sie über ein Lager 46 schwenkbar auf dem Zapfen 42 gelagert.

Wie aus Fig. 1 ersichtlich ist, ist einwärts von der Außenwange 44 eine Ausnehmung 47 vorgesehen und einwärts von der Außenwange 43 eine Ausnehmung 48 vorgesehen. Den wesentlichen Teil hierin nimmt ein Hohlrad 49 ein, dessen Querschnitt gemäß Fig. 1 C-förmig ist. An der Stelle 51 ist das Hohlrad 49 fest mit der ersten Gelenkhälfte 16 verbunden. Im Boden 52 des Hohlrades 49 ist koaxial ein Lager 53 vorgesehen, das eine Relativdrehbarkeit um den Zapfen 42 ermöglicht. Der Umfangsrand 54 des Hohlrades 49 verläuft koaxial. In dem durch den Boden 52 und den Umfangsrand 54 definierten Raum läuft die Scheibe 40, die den Planetenradsteg bildet.

Der Umfangsrand 54 geht an seinem rechten Endbereich in einen koaxialen, nach innen weisenden Flansch 56 über, der an seinem Innenumfang 57 Zähne trägt, die mit dem Planetenteilrad 39 kämmen.

Wie man aus Fig. 1 erkennt, sind rechts von der Seitenwand 21 alle diejenigen Teile identisch vorgesehen, die soeben beschrieben wurden, mit Ausnahme der Strichscheibe 29, der Abtastköpfe 31, 32 und des Vorsprunges 33. Sie brauchen deshalb nicht erneut beschrieben zu werden.

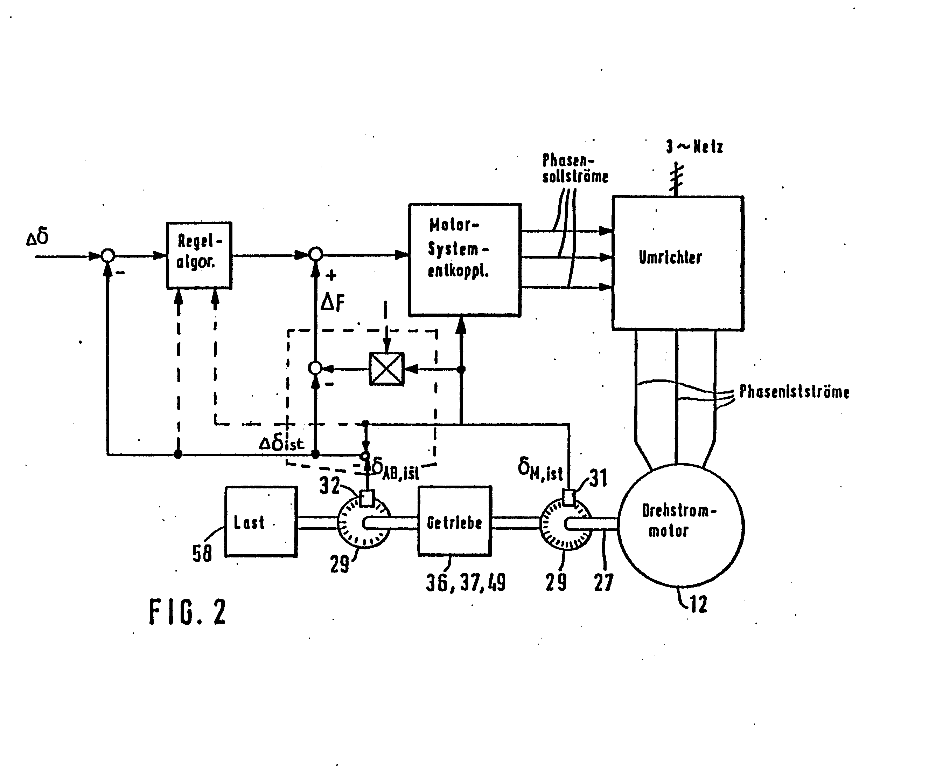

Eine Schaltung, mit der die in Fig. 1 dargestellte Vorrichtung betrieben werden kann, zeigt Fig. 2. Man sieht dort den Drehstrommotor 12, seine Welle 27, die Strichscheibe 29, den ersten Abtastkopf 31. Es folgt dann das Getriebe. Zeichnerisch anders aber funktionell gleich ist nun die Strichscheibe 29 auf der Abtriebswelle des Getriebes vorgesehen und mit ihr arbeitet der zweite Abtastkopf 32 zusammen. Dies macht auch zugleich deutlich, daß die erfindungsgemäße Vorrichtung eine Strichscheibe spart. Ganz links ist die Last 58 symbolisch angedeutet.

Der Abtastkopf 31 mißt zusammen mit der Strichscheibe 29 den Wert $\delta_{Mist}$, d. h. die Ist-Winkellage des Rotors 11.

Der zweite Abtastkopf 32 mißt zusammen mit der Strichscheibe 29 die direkte Gelenkwinkelstellung, d. h. die Winkellage $\delta AB_{ist}$, d. h. die Ist-Winkellage der Gelenkhälfte 16 (=A) zur Gelenkhälfte 34 (=B).

Beim Soll-Ist-Vergleich links oben steht $\Delta\delta$ an, d. h. der Wert des Winkels, um den sich eine Gelenkhälfte 16 gegenüber der anderen Gelenkhälfte 34 gedreht hat. In dem linken oberen Block ist der Regel-Algorithmus eingegeben, gemäß dem geregelt werden soll. Der Wert $\Delta F$ gibt den Offset an. Wirkt keine Kraft, dann ist $\Delta F$ = Null. Wirkt eine Kraft, dann wird durch die Differenz der beiden Winkel ein Kraft-Offset ermittelt. Die Störgröße $\Delta F$ wird dem Ausgang des Regel-Algorithmus aufgeschaltet und der Motor-system-Entkopplung eingegeben. Motorsystem-Entkopplungen sind an sich bekannt. Die Motorsystem-Entkopplung erzeugt für den Drehstrommotor 12 Soll-Werte für die Phasenströme, die den Umrichter steuern. Dieser läßt dann Strom und Spannung des Drei-Phasennetzes so als Phasen-Ist-Ströme zum Drehstrommotor 12 gelangen, wie dies in Anbetracht des Regel-Algorithmus der Last, der Steifigkeit, des Getriebespiels usw. notwendig ist.

Wie Fig. 2 aufzeigt, könnte man in Abwandlung den Rotor 11 zum Stator machen und den Stator 13 zum Rotor. Allerdings müßte man dann mit Hohlwellen arbeiten, was den Aufbau evtl. komplizieren würde.

Gestrichelt ist eine Recheneinrichtung angedeutet, die aus den Meßsignalen des ersten und zweiten Abtastkopfes 31, 32 das auf das Gelenk mit den Gelenkhälften 16 und 34 wirkende Drehmoment berechnet, das zur Erhöhung der Dynamik in der Regelung verwendet wird. Die Recheneinrichtung erzeugt am Ausgang die Störgröße $\Delta F$ als Differenzwinkel, der sich wie folgt ermittelt. Der Gelenkwinkel $\delta AB_{ist}$ wird als Differenz der Signale der beiden Abtastköpfe 31, 32 gebildet. Davon wird der mit der Getriebeübersetzung multiplizierte — bei einem anderen Ausführungsbeispiel auch dividierte — Rotorpositionswinkel $\delta_{Mist}$ abgezogen.

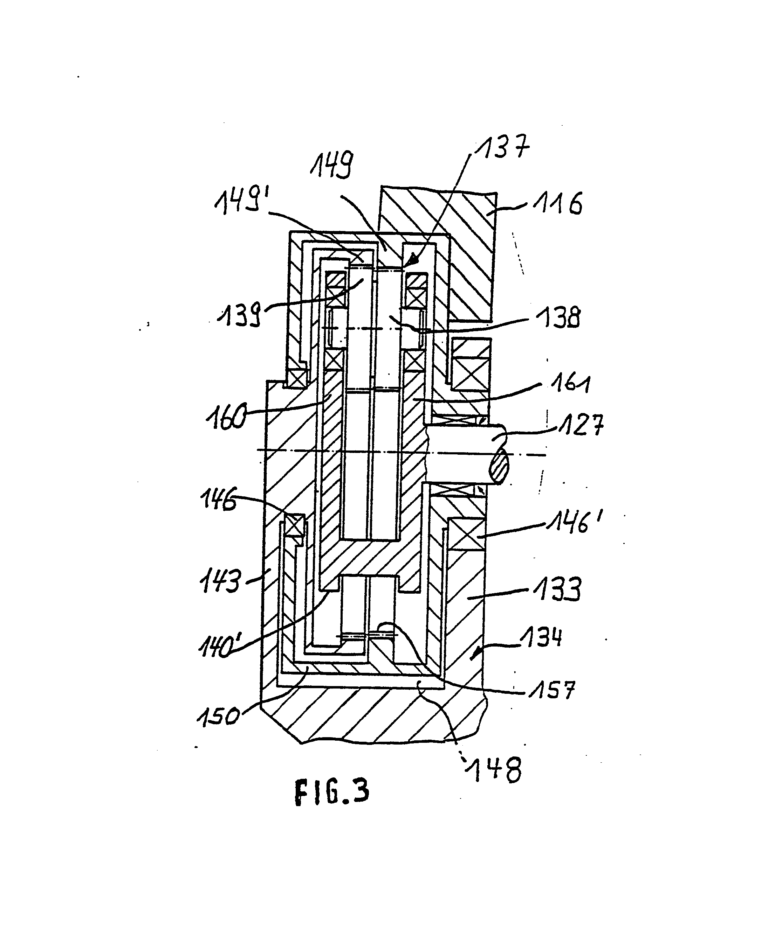

Bei dem in Fig. 3 gezeigten zweiten Ausführungsbeispiel sind für die Teile, die dem ersten Ausführungsbeispiel entsprechen um 100 größere Bezugszeichen verwendet, so daß dadurch zur Vermeidung von Wiederholungen auf die Beschreibung des ersten Ausführungsbeispieles Bezug genommen ist.

In Fig. 3 ist lediglich ein auf der linken Seite an die Welle 127 des Rotors anschließendes Planetengetriebe anderer Gestaltung gezeigt. Das Planetengetriebe weist einen Planetenradträger 140' auf, der drehfest mit der Welle 127 verbunden und direkt von dieser angetrieben ist. Der Planetenradträger 140 weist zwei im axialen Abstand voneinander einstückig verbundene Stege oder Scheiben 160, 161 auf, zwischen denen ein Planetenrad 137 mittels in jedem Steg 160, 161 auf gleicher Höhe angeordneten Lagern drehbar gelagert ist. Das Planetenrad 137 besteht aus zwei koaxialen, drehfest verbundenen, z. B. einstückigen, Planetenrädern 138, 139, von denen das letztere einen größeren Durchmesser als das Planetenrad 138 aufweist.

Das Planetenradgetriebe weist ferner zwei axial benachbarte Hohlräder 149, 149' auf. Das Planetenrad 138 kämmt mit der Innenverzahnung des Hohlrades 149. Das andere Planetenrad 139 kämmt mit der Innenverzahnung des Hohlrades 149'. Das Hohlrad 149 ist fest mit der einen Gelenkhälfte 116 verbunden, während das andere Hohlrad 149' fest mit der anderen Gelenkhälfte 134 verbunden ist.

Das eine Hohlrad 149, das mit dem Planetenrad 138 kämmt, ist fester Teil eines trommelförmigen Gehäuses 150, welches in die Ausnehmung 148 hineinragt, die zwischen der linken Außenwange 143 und dem rechten Vorsprung 133 gebildet ist.

Dieses Gehäuse 150 ist fest mit der Gelenkhälfte 116 verbunden, die entsprechend Fig. 1 den Motor aufnimmt. Der die Ausnehmung 148 enthaltende Teil ist fest mit der anderen Gelenkhälfte 134 verbunden.

Das andere Hohlrad 149', das fest mit der den Motor nicht tragenden Gelenkhälfte 134 verbunden ist, ist innerhalb des Gehäuses 150 mit dem anderen Hohlrad 149 angeordnet unter relativer Drehbarkeit dazwischen. Bei Antrieb über die Welle 127 wird der Planetenträger 140' in gleicher Drehrichtung angetrieben. Beide Planetenräder 138, 139 laufen in den zugeordneten Hohlrädern 149, 149' um, so daß eine Relativdrehung zwischen der am Gehäuse 150 festen einen Gelenkhälfte 116 und der mit dem Hohlrad 149' drehfest verbundenen anderen Gelenkhälfte 134 erfolgt. Der Drehlagerung dienen zwei in axialem Abstand angeordnete Lager 146, 146'.

Bei beiden Ausführungsformen kann die zwischen den beidseitigen Umlaufgetrieben verlaufende Welle des Rotors des Motors als nachgiebige, die Abtriebskräfte symmetrierende Welle, insbesondere als Torsionswelle, ausgebildet sein. Eine solche ist in der Lage, ein zwischen beiden Gelenkhälften wirkendes Moment durch Torsion auszugleichen. Beispielsweise wird die Welle als Hohlwelle gestaltet oder für diese Nachgiebigkeit nach Festigkeitsgesichtspunkten entsprechend ausgelegt.

Statt dessen kann der Ausgleich auch dadurch geschehen, daß bei mindestens einem der beidseitig symmetrisch plazierten Umlaufgetriebe zumindest ein miteinander in Zahneingriff stehendes Zahnradpaar eine Schrägverzahnung aufweist. Derartige schräg verzahnte Getriebeteile bewirken ebenfalls eine axiale Symmetrierung unter Vermeidung einer Tordierung des Gelenkes.

## Patentansprüche

1. Vorrichtung zur Erzeugung von Schwenkbewegungen, insbesondere für die Arme von Industrierobotern, für Fertigungseinrichtungen o. dgl., mit einer ersten Gelenkhälfte (16) und einer zweiten Gelenkhälfte (34), die um eine Schwenkachse (18) schwenkbeweglich verbunden sind, mit mindestens einem Motor (12) hoher Energiedichte, der mit seinem Rotor (11) und seinem Stator (13) in einer Ausnehmung (14) innerhalb einer der beiden Gelenkhälften (16, 34) aufgenommen ist, wobei der eine Motorteil, z. B. der Stator (13), fest mit der einen Gelenkhälfte verbunden ist, während der andere Motorteil, z. B. der Rotor (11), in Bezug auf die den Motor (12) aufnehmende eine Gelenkhälfte (16) drehbar ist, und mit einer drehmomenterhöhenden Untersetzungsgetriebevorrichtung, deren Eingang vom umlaufenden Motorteil, z. B. dem Rotor (11), angetrieben ist und deren Ausgang fest mit der anderen Gelenkhälfte (34) verbunden ist, dadurch gekennzeichnet, daß der Motor (12) auf beiden Axialseiten je eine Untersetzungsgetriebevorrichtung gleicher Art aufweist, die beide symmetrisch und koaxial zum Motor (12) angeordnet sind, daß jede Untersetzungsgetriebevorrichtung als Umlaufgetriebe ausgebildet ist, daß der umlaufende Motorteil, insbesondere der Rotor (11), beidseitig je eine koaxiale Abtriebswelle (27, 28) trägt, die zugleich als Antriebswelle für die je Seite zugeordnete Untersetzungsgetriebevorrichtung ausgebildet ist und diese unmittelbar antreibt, und daß auf der Abtriebswelle (27) zumindest auf einer Seite eine Kodescheibe (29) fest angeordnet ist und mit dieser umläuft und der Kodescheibe (29) mindestens ein mit dieser zusammenwirkender Meßwertaufnehmer (31, 32) zugeordnet ist, der fest mit einer Gelenkhälfte (16, 34) verbunden ist.

2. Vorrichtung nach Anspruch 1, dadurch gekennzeichnet, daß der Motor (12) als Elektromotor, insbesondere als vorzugsweise permanenterregter Synchronmotor oder als Käfigläufer-Asynchronmotor, ausgebildet ist.

3. Vorrichtung nach Anspruch 1, dadurch gekennzeichnet, daß das Umlaufgetriebe als Planetengetriebe oder Harmonic-Drive-Getriebe ausgebildet ist.

4. Vorrichtung nach einem der Ansprüche 1-3, dadurch gekennzeichnet, daß jedes Umlaufgetriebe, insbesondere Planetengetriebe, ein vom umlaufenden Motorteil angetriebenes Zahnrad (36) aufweist, das auf zumindest ein Planetenrad (37) arbeitet, dessen Hohlrad (49) fest mit derjenigen Gelenkhälfte (16) verbunden ist, die den Motor (12) enthält, daß das Planetenrad (37) einen Planetenradsteg (40) mit einer Welle (42) antreibt, die koaxial zum Motor (12) angeordnet und drehfest mit der anderen, den Motor (12) nicht enthaltenden Gelenkhälfte (34) verbunden ist, und daß diese über das Planetenrad (37) angetriebene Welle (42) die Lagerwelle für die den Motor (12) enthaltende Gelenkhälfte (16) bildet, die mittels zumindest eines Lagers (46, 53) auf der Welle (42) schwenkbar gelagert ist.

5. Vorrichtung nach Anspruch 4, dadurch gekennzeichnet, daß der Stator (13) drehfest in der einen, den Motor (12) aufnehmenden Gelenkhälfte (16) gehalten ist und daß die Welle (27) des Rotors (11) das das mindestens eine Planetenrad (37) antreibende Zahnrad (36) trägt.

6. Vorrichtung nach Anspruch 4 oder 5, dadurch gekennzeichnet, daß das Zahnrad (36) mit mehreren Planetenrädern (37) kämmt, die ihrerseits mit dem Hohlrad (49) kämmen, wobei sich die Planetenräder (37) auf dem Zahnrad (36) abwälzen.

7. Vorrichtung nach einem der Ansprüche 4-6, dadurch gekennzeichnet, daß das Planetenrad (37) aus zwei zueinander koaxialen, starr miteinander verbundenen Planeten-Teilrädern (38, 39) besteht, von denen das Planetenteilrad (38) mit dem größeren Durchmesser mit dem Zahnrad (36) und das andere Planetenteilrad (39) mit dem Hohlrad (49) kämmt.

8. Vorrichtung nach einem der Ansprüche 4-7, dadurch gekennzeichnet, daß das Hohlrad (49) im axialen Querschnitt C-Profil hat und im Boden (52) des C ein koaxiales Lager (53) sitzt, das von der Welle (42), die über das mindestens eine Planetenrad (37) angetrieben ist, durchsetzt ist und eines der Lager zur Schwenklagerung der einen, den Motor (12) aufnehmenden Gelenkhälfte (16) bildet.

9. Vorrichtung nach Anspruch 1, gekennzeichnet durch einen Meßwertaufnehmer (31), der fest mit derjenigen Gelenkhälfte (16) verbunden ist, an der der Stator (13) fest angeordnet ist, und der zusammen mit der Kodescheibe (29) der Messung des Rotorpositionswinkels dient.

10. Vorrichtung nach Anspruch 1, gekennzeichnet durch einen weiteren Meßwertaufnehmer (32), der ebenfalls mit der Kodescheibe (29) zusammenwirkt und der fest mit der anderen, den Motor (12) nicht enthaltenden Gelenkhälfte (34) verbunden ist und zusammen mit der Kodescheibe (29) und dem ersten Meßwertaufnehmer (31) zur direkten Gelenkwinkelstellungsmessung dient.

11. Vorrichtung nach Anspruch 10, gekennzeichnet durch eine mit beiden Meßwertaufnehmern (31, 32) verbundene Auswerteschaltung und Regeleinrichtung, die aus den Meßwertsignalen des ersten und zweiten Meßwertaufnehmers (31, 32) das auf das Gelenk wirkende Drehmoment berechnet und dieses durch direkte gegensinnige Aufschaltung auf die Motorstellgröße kompensiert oder aber ausregelt.

12. Vorrichtung nach einem der Ansprüche 1-11, dadurch gekennzeichnet, daß jeder Meßwertaufnehmer (31, 32) als optischer oder magnetischer Meßwertaufnehmer ausgebildet ist.

13. Vorrichtung nach einem der Ansprüche 1-8, dadurch gekennzeichnet, daß die zwischen den beidseitigen Umlaufgetrieben verlaufende Welle (27, 127) des Rotors (11) als nachgiebige, die Abtriebskräfte symmetrierende Welle ausgebildet ist.

14. Vorrichtung nach Anspruch 13, dadurch gekennzeichnet, daß die nachgiebige Welle als Torsionswelle ausgebildet ist.

15. Vorrichtung nach einem der Ansprüche 1-8, dadurch gekennzeichnet, daß bei mindestens einem der beiden Umlaufgetriebe zumindest ein miteinander in Zahneingriff stehendes Zahnradpaar eine Schrägverzahnung aufweist.

16. Vorrichtung nach einem der Ansprüche 1-3 oder nach einem der Ansprüche 13-15, dadurch gekennzeichnet, daß jedes Umlaufgetriebe, insbesondere Planetengetriebe, einen vom umlaufenden Motorteil angetriebenen Planetenradträger (140'), zwei axial benachbarte Hohlräder (149, 149') und zumindest ein mit den Hohlrädern (149, 149') in Zahneingriff stehendes, am Planetenradträger (140') drehbar gehaltenes Planetenrad (137) aufweist und daß das eine Hohlrad (149) fest mit der einen Gelenkhälfte (116) und das andere Hohlrad (149') fest mit der anderen Gelenkhälfte (134) verbunden ist.

17. Vorrichtung nach Anspruch 16, dadurch gekennzeichnet, daß eines der beiden Hohlräder (149) fester Teil eines trommelförmigen Gehäuses (150) ist, das mittels zweier in axialem Abstand voneinander angeordneter Lager (146, 146') in Bezug auf die andere Gelenkhälfte (134) gelagert ist.

18. Vorrichtung nach Anspruch 17, dadurch gekennzeichnet, daß das eine Hohlrad (149'), das mit der den Motor nicht tragenden Gelenkhälfte (134) fest verbunden ist, innerhalb des das andere Hohlrad (149) enthaltenden Gehäuses (150) angeordnet ist, welches fest mit der den Motor enthaltenden anderen Gelenkhälfte (116) verbunden ist.

19. Vorrichtung nach einem der Ansprüche 16 bis 18, dadurch gekennzeichnet, daß der Planetenträger (140) zwei in axialem Abstand voneinander angeordnete, fest miteinander verbundene Stege oder Scheiben (160, 161) aufweist, zwischen denen zumindest ein Planetenrad (137) bzw. ein aus zwei koaxialen Planetenrädern (138, 139) mit vorzugsweise unterschiedlichen Durchmessern bestehendes Paar angeordnet ist, dessen Einzelräder (138, 139) jeweils mit einem zugeordneten Hohlrad (149 bzw. 149') in Eingriff stehen.

## Claims

1. Apparatus for generating pivoting movements, especially for the arms of industrial robots, for manufacturing equipment or the like, having a first joint half (16) and a second joint half (34) which are connected pivotally movably about a pivot axis (18), having at least one motor (12) of high density of energy which is accommodated with its rotor (11) and its stator (13) in an aperture (14) within one of the two joint halves (16, 34), the one motor part, for example the stator (13), being firmly connected with the one joint half, while the other motor part, for example the rotor (11), is rotatable in relation to the one joint half (16) which accommodates the motor (12), and having a torque-increasing reduction transmission apparatus, the input of which is driven by the rotating motor part, for example the rotor (11), and the output of which is firmly connected with the other joint half (34), characterised in that the motor (12) comprises a reduction transmission apparatus of like nature on each of the two axial sides which are both arranged symmetrically and coaxially in relation to the motor (12), in that each reduction transmission apparatus is formed as an epicyclic gear, in that the rotating motor part, especially the rotor (11), carries a coaxial drive-output shaft (27, 28) on each of the two sides which is formed at the same time as drive-input shaft for the reduction transmission apparatus allocated to each side and directly drives this apparatus, and in that on the drive-output shaft (27) at least on one side a code disc (29) is fixedly arranged and rotates therewith and with the code disc (29) there is associated at least one measured-value detector (31, 32) co-operating therewith, which is firmly connected with one joint half (16, 34).

2. Apparatus according to Claim 1, characterised in that the motor (12) is formed as an electric motor, especially as preferably permanently energised synchronous motor or as cage rotor asynchronous motor.

3. Apparatus according to Claim 1, characterised in that the epicyclic gear is made as a planetary gear or harmonic drive gear.

4. Apparatus according to one of Claims 1-3, characterised in that each epicyclic gear, especially planetary gear, comprises a gear wheel (36) driven by the rotating motor part and working upon at least one planet wheel (37), the hollow wheel (49) of which is firmly connected with that joint half (16) which contains the motor (12), in that the planet wheel (37) drives a planet wheel web (40) with a shaft (42) which is arranged coaxially with the motor (12) and is connected fast in rotation with the other joint half (34) not containing the motor (12), and in that this shaft (42) driven through the planet wheel (37) forms the bearing shaft for the joint half (16) containing the motor (12), which is pivotably mounted by means of at least one bearing (46, 53) on the shaft (42).

5. Apparatus according to Claim 4, characterised in that the stator (13) is held fast in rotation in the one joint half (16) which accommodates the motor (12) and in that the shaft (27) of the rotor (11) carries the gear wheel (36) which drives at least one planet wheel (37).

6. Apparatus according to Claim 4 or 5, characterised in that the gear wheel (36) meshes with several planet wheels (37) which in turn mesh with the hollow wheel (49), with the planet wheels (37) rolling on the gear wheel (36).

7. Apparatus according to one of Claims 4-6, characterised in that the planet wheel (37) consists of two mutually coaxial, rigidly interconnected planet part-wheels (38, 39) of which the planet part-wheel (38) with the larger diameter meshes with the gear wheel (36) and the other planet part-wheel (39) meshes with the hollow wheel (49).

8. Apparatus according to one of Claims 4-7, characterised in that the hollow wheel (49) has a C-profile in axial cross-section and in the bottom (52) of the C a coaxial bearing (53) is seated which is penetrated by the shaft (42) which is driven through the at least one planet wheel (37), and forms one of the bearings for the pivotal mounting of the one joint half (16) accommodating the motor (12).

9. Apparatus according to Claim 1, characterised by a measured-value detector (31) which is firmly connected with that joint half (16) on which the stator (13) is fixedly arranged and together with the code disc (29) serves for the measurement of the positional angle of the rotor.

10. Apparatus according to Claim 1, characterised by a further measured-value detector (32) which likewise co-operates with the code disc (29) and is firmly connected with the other joint half (34), which does not contain the motor (12), and serves together with the code disc (29) and the first measured-value detector (31) for the direct joint angle position measurement.

11. Apparatus according to Claim 10, characterised by an evaluator circuit and regulator apparatus connected with the two measured-value detectors (31, 32), which calculates, from the measured-value signals of the first and second measured-value detectors (31, 32), the torque acting upon the joint and compensates, or however regulates out, this torque by direct contrary connection to the motor setting value.

12. Apparatus according to one of Claims 1-11, characterised in that each measured-value detector (31, 32) is formed as an optical or magnetic measured-value detector.

13. Apparatus according to one of Claims 1-8, characterised in that the shaft (27, 127) of the rotor (11), which extends between the epicyclic gears on both sides, is formed as a yieldable shaft which balances the drive-output forces.

14. Apparatus according to Claim 13, characterised in that the yieldable shaft is formed as torsion shaft.

15. Apparatus according to one of Claims 1-8, characterised in that in at least one of the two epicyclic gears at least one mutually meshing gear wheel pair has helical toothing.

16. Apparatus according to one of Claims 1-3 or according to one of Claims 13-15, characterised in that each epicyclic gear, especially planetary gear, comprises a planet wheel carrier (140') driven by the rotating motor part, two axially adjacent hollow wheels (149, 149') and at least one planet wheel (137) in mesh with the hollow wheels (149, 149') and held rotatably on the planet wheel carrier (140') and in that the one hollow wheel (149) is firmly connected with the one joint half (116) and the other hollow wheel (149') is firmly connected with the other joint half (134).

17. Apparatus according to Claim 16, characterised in that one of the two hollow wheels (149) is a fixed part of a housing (150) of drum form which is mounted by means of two bearings (146, 146') arranged with axial spacing from one another, in relation to the other joint half (134).

18. Apparatus according to Claim 17, characterised in that the one hollow wheel (149'), which is firmly connected with the joint half (134) not carrying the motor, is arranged within the housing (150) containing the other hollow wheel (149), which housing is firmly connected with the other joint half (116) containing the motor.

19. Apparatus according to one of Claims 16 to 18, characterised in that the planet carrier (140) comprises two webs or discs (160, 161) arranged with axial spacing from one another and firmly connected with one another, between which there is arranged at least one planet wheel (137) or a pair consisting of two coaxial planet wheels (138, 139) with preferably different diameters, the individual wheels (138, 139) of which are each in engagement with an associated hollow wheel (149 and 149' respectively).

**Revendications**

1. Dispositif permettant de produire des mouvements pivotants, pour les bras de robots industriels notamment, pour des équipements de fabrication ou autres, avec une première moitié articulée (16) et une seconde (34) qui peuvent pivoter autour d'un axe de rotation (18), avec un moteur au moins (12) d'une densité d'énergie élevée, qui est logé avec son rotor (11) et son stator (13) dans un évidement (14), prévu à l'intérieur de l'une des deux moitiés (16, 34), l'une des parties du moteur, le stator (13) par exemple, étant fixé à l'une des moitiés articulées, l'autre partie, le rotor (11) par exemple, tournant par rapport à la moitié (16) qui reçoit le moteur (12), et avec un dispositif de réduction augmentant le couple moteur, dont l'entrée est entraînée par la partie rotative du moteur, le rotor (11) par exemple, et dont la sortie est fixée à l'autre moitié articulée (34), caractérisé en ce que le moteur (12) présente deux dispositifs de réduction analogues, qui sont respectivement prévus sur ses deux côtés axiaux et qui lui sont symétriques et coaxiaux, en ce que chaque dispositif de réduction est constitué par un engrenage périphérique, en ce que la partie rotative du moteur, le rotor (11) notamment, supporte sur ses deux côtés un arbre de sortie coaxial (27, 28), qui sert parallèlement d'arbre moteur pour les dispositifs de réduction bilatéraux, qu'il entraîne directement, et en ce qu'un disque codeur (29) est fixé sur l'arbre de sortie (27), sur un côté du moins, et tourne avec celui-ci, un capteur de mesure au moins (31, 32), fixé à l'une des moitiés articulées (16, 34), étant associé au disque (29).

2. Dispositif suivant la revendication 1, caractérisé en ce que le moteur (12) est un moteur électrique, un moteur synchrone à aimants permanents de préférence ou un moteur asynchrone à cage d'écureuil.

3. Dispositif suivant la revendication 1, caractérisé en ce que l'engrenage périphérique est un engrenage planétaire ou un engrenage « harmonic-drive ».

4. Dispositif suivant l'une quelconque des revendications 1 à 3, caractérisé en ce que chaque engrenage périphérique, chaque engrenage planétaire notamment, présente une roue dentée (36), entraînée par la partie rotative du moteur et engrènant avec un satellite (37) du moins, dont la roue à denture intérieure (49) est fixée à la moitié articulée (16) qui comporte le moteur (12), en ce que le satellite (37) entraîne un porte-pignons (40) doté d'un arbre (42), qui est coaxial au moteur (12) et est fixé à l'autre moitié articulée (34), ne comportant pas le moteur (12), et en ce que cet arbre (42), entraîné par l'intermédiaire du satellite (37), constitue un arbre-support pour la moitié (16) qui reçoit le moteur (12) et qu'un palier du moins (46, 53) permet de faire pivoter sur cet arbre (42).

5. Dispositif suivant la revendication 4, caractérisé en ce que le stator (13) est fixé dans l'une des moitiés articulées (16), qui reçoit le moteur (12), et en ce que l'arbre (27) du rotor (11) supporte la roue dentée (36), qui entraîne un satellite au moins (37).

6. Dispositif suivant l'une des revendications 4 et 5, caractérisé en ce que la roue dentée (36) engrène avec plusieurs satellites (37), qui engrènent eux-mêmes avec la roue à denture intérieure (49), les roues planétaires (37) tournant sur la roue (36).

7. Dispositif suivant l'une quelconque des revendications 4 à 6, caractérisé en ce que la roue planétaire (37) se compose de deux satellites partiels (38, 39) coaxiaux et solidaires l'un de l'autre, dont l'un (38), de diamètre supérieur, engrène avec la roue dentée (36), l'autre (39) engrènant avec la roue à denture intérieure (49).

8. Dispositif suivant l'une quelconque des revendications 4 à 7, caractérisé en ce que la roue à denture intérieure (49) a une section axiale en C, un palier coaxial (53), monté sur le fond (52) du C, étant traversé par l'arbre (42) entraîné par un satellite (37) au moins, et constituant l'un des paliers qui permet de supporter l'une des moitiés articulées (16), recevant le moteur (12).

9. Dispositif suivant la revendication 1, caractérisé par un capteur de mesure (31), qui est solidaire de la moitié articulée (16), sur laquelle est fixé le stator (13), et qui permet de mesurer avec le disque codeur (29) la position angulaire du rotor.

10. Dispositif suivant la revendication 1, caractérisé par un second capteur de mesure (32), qui est également associé au disque codeur (29), est fixé à l'autre moitié articulée (34), ne comportant pas le moteur (12), et permet avec le disque (29) et le premier capteur (31) de mesurer directement la position angulaire de l'articulation.

11. Dispositif suivant la revendication 10, caractérisé par un circuit d'identification et un dispositif de réglage relié aux deux capteurs de mesure (31, 32), qui calcule, à partir des signaux de mesure émis par le premier et le second capteurs (31, 32), le couple de rotation exercé sur l'articulation, et qui compense ou règle ce couple par inversion directe sur la grandeur réglante du moteur.

12. Dispositif suivant l'une quelconque des revendications 1 à 11, caractérisé en ce que chaque capteur de mesure (31, 32) est représenté par un capteur optique ou magnétique.

13. Dispositif suivant l'une quelconque des revendications 1 à 8, caractérisé en ce que l'arbre (27, 127) du rotor (11), compris entre les engrenages bilatéraux, est représenté par un arbre déformable, assurant la symétrie des forces de sortie.

14. Dispositif suivant la revendication 13, caractérisé en ce que l'arbre déformable est représenté par un arbre de torsion.

15. Dispositif suivant l'une quelconque des revendications 1 à 8, caractérisé en ce que deux roues dentées en prise du moins, à denture hélicoïdale, sont prévues sur l'un au moins des deux engrenages.

16. Dispositif suivant l'une quelconque des revendications 1 à 3 ou 13 à 15, caractérisé en ce que chaque engrenage, chaque engrenage planétaire notamment, présente un porte-pignons satellites (140'), entraîné par la partie rotative du moteur, deux roues à denture intérieure (149, 149'), juxtaposées axialement, et un satellite (137) du moins, en prise avec les roues (149, 149') et monté sur le porte-pignons (140'), et en ce que les roues à denture intérieure (149, 149') sont respectivement solidaires des moitiés articulées (116, 134).

17. Dispositif suivant la revendication 16, caractérisé en ce que l'une des deux roues à denture intérieure (149) fait partie d'un carter en forme de tambour (150), qui est monté par rapport à l'autre moitié articulée (134) au moyen de deux paliers (146, 146'), prévus à une certaine distance axiale l'un de l'autre.

18. Dispositif suivant la revendication 17, caractérisé en ce que l'une des roues à denture intérieure (149'), qui est solidaire de la moitié articulée (134) ne recevant pas le moteur, est montée à l'intérieur du carter (150), qui comporte l'autre roue (149) et qui est fixé à la moitié articulée (116) contenant le moteur.

19. Dispositif suivant l'une quelconque des revendications 16 à 18, caractérisé en ce que le porte-pignons satellites (140) présente deux traverses ou disques (160, 161), solidaires et prévus à une certaine distance axiale l'un de l'autre, entre lesquels est monté un satellite (137) du moins ou un couple composé de deux satellites coaxiaux (138, 139), de diamètres différents de préférence, dont les roues (138, 139) engrènent respectivement avec les deux roues à denture intérieure (149 et 149').

FIG.1

0 118 012

FIG. 2

FIG.3